# EUROPÄISCHE PATENTSCHRIFT

(11) **EP 1 536 997 B1**
(45) Veröffentlichungstag und Bekanntmachung des Hinweises auf die Patenterteilung: **17.01.2007**
(21) Anmeldenummer: 03750411.5
(22) Anmeldetag: 13.08.2003
(51) Int. Cl.: B60T 17/22, B60T 11/30

(54) **VERFAHREN ZUM WECHSEL DES DRUCKMITTELS EINES ELEKTROHYDRAULISCHEN BREMSSYSTEMS**
METHOD FOR CHANGING THE PRESSURE MEDIUM IN AN ELECTROHYDRAULIC BRAKING SYSTEM
PROCEDE POUR REMPLACER LE FLUIDE SOUS PRESSION D'UN SYSTEME DE FREINAGE ELECTROHYDRAULIQUE

(30) Priorität: 14.08.2002 DE 10237183; 05.03.2003 DE 10309479; 11.04.2003 DE 10316648
(43) Veröffentlichungstag der Anmeldung: 08.06.2005
(73) Patentinhaber: Continental Teves AG & Co. oHG, 60488 Frankfurt am Main (DE); Wagner, Axel, 36381 Schlüchtern (DE)
(72) Erfinder: BAECHLE, Martin, 61479 Glashütten 1 (DE); HITZEL, Michael, 63322 Rödermark (DE)
(74) Vertreter: Dusil, Vladimir
(86) Internationale Anmeldenummer: PCT/EP2003/008986
(87) Internationale Veröffentlichungsnummer: WO 2004/016489

(56) Entgegenhaltungen:
- WO-A-02/42135
- DE-A- 4 232 130
- DE-A- 19 528 859

## Beschreibung

Die Erfindung bezieht sich auf ein Verfahren zum Wechsel des Druckmittels eines elektrohydraulischen Bremssystems, bestehend aus einem pedalbetätigten Hauptbremszylinder und einem vom Hauptbremszylinderdruck geregelten Bremskreis mit einer Pumpe, deren Saugseite über eine Saugleitung an einen Druckmittelvorratsbehälter angeschlossen ist, sowie Ein- und Auslassventilen für die an den Bremskreis angeschlossenen Radbremsen, wobei ein Auslassventil die Verbindung der zugehörigen Radbremse zum Druckmittelvorratsbehälter über eine drucklose Rücklaufleitung steuert, bei dem ein konventioneller Wechsel des Druckmittels durch mehrfache, manuelle Betätigung des Bremspedals und ein Einschalten der Pumpe und Fördern von Druckmittel aus dem Vorratsbehälter vorgesehen ist.

Bei einer derartigen hydraulischen Bremsanlage, bei der Teile des Leitungssystems durch Ventile geschlossen sind, reicht ein konventionell durchgeführter Wechsel des Druckmittels nicht aus, um alle Bereiche des Bremssystems mit frischem Druckmittel zu versorgen und luft- und gasblasenfrei zu erhalten, da ein solcher Wechsel nur die Bremsleitung zwischen dem Hauptbremszylinder und der jeweiligen Radbremse erfasst und mit frischem Druckmittel versorgt. Insbesondere bei hohem Wasser- oder Schmutzgehalt in der Bremsflüssigkeit muss sichergestellt werden, dass das Druckmittelvolumen, das sich außerhalb der hydraulischen Rückfallebene befindet, durch frisches Druckmittel ersetzt wird. Durch diese Maßnahme wird die Betriebssicherheit eines elektrohydraulischen Bremssystems wesentlich erhöht.

Aus der veröffentlichten Befüllvorschrift ATE 520 24.46 ist ein Bremsflüssigkeitswechsel bzw. ein Wechsel des Druckmittels bekannt. Diese Befüllvorschrift dient als Grundlage für Anleitungen zum Bremsflüssigkeitswechsel, wie er in Werkstätten durchgeführt wird. Dabei handelt es sich um einen sogenannten konventionellen Wechsel des Druckmittels mittels mehrfacher manueller Betätigung des Bremspedals, was zur Folge hat, dass lediglich das Druckmittel in den Bremsleitungen zwischen dem Hauptbremszylinder und der jeweiligen Radbremse durch frisches Druckmittel ersetzt wird.

Aus der DE 195 28 859 A1 ist ein Verfahren zur Entlüftung und Befüllung einer schlupfgeregelten Zweikreisbremsanlage für Kraftfahrzeuge bekannt. Bei dem vorbekannten Verfahren ist vorgesehen, dass die Entlüftung der Radbremsen in zwei Betriebsabschnitten vollzogen wird. Dabei werden im ersten Betriebsabschnitt die Radbremsen der Vorderachse und der Hinterachse durch zyklisches Betätigen der Bremsdruckgebers vorentlüftet um anschließend im zweiten Betriebsabschnitt die Hauptentlüftung und Befüllung der Vorderrad- und Hinterradradbremsen durch Betätigungszyklen des Bremsdruckgebers, der Druckmodulationsventile und Inbetriebnahme der Pumpe durchzuführen. Bei einer elektrohydraulischen Bremsanlage reicht ein derart durchgeführter Wechsel des Druckmittels nicht aus, um alle Bereiche des Bremssystems mit frischem Druckmittel zu versorgen.

Die Erfindung beruht somit auf dem Problem, für eine elektrohydraulische Bremsanlage ein Verfahren darzustellen, das es ermöglicht, einen Druckmittelwechsel durchzuführen, bei dem alle Bereiche des Bremssystems mit frischem Druckmittel versorgt werden.

Zur Lösung des Problems sieht die Erfindung vor, dass ein Schalten der Ein- und Auslassventile und eines Trennventils vorgesehen ist, sodass Druckmittel aus einem Hochdruckspeicher entweder zu den Radentlüfteranschlüssen oder in den Druckmittelvorratsbehälter gelangt, wobei die Verbindung der zugehörigen Radbremse zum Hochdruckspeicher durch ein Einlassventil gesteuert wird und der Hauptbremszylinder über das Trennventil stromabwärts der Einlassventile an den Bremskreis angeschlossen ist.

Da große Teile des Leitungssystems einem konventionellen Bremssystem entsprechen (nämlich die Bremsleitungen, die von dem Hauptbremszylinder über die Trennventile zu den Radbremsen führen), kann der Wechsel des Druckmittels für diesen Teil des Leitungssystems in konventioneller Weise erfolgen, d. h. frisches Druckmittel wird über den Druckmittelvorratsbehälter nachgefüllt und durch die mehrfache, manuelle Betätigung des Bremspedals vom Hauptbremszylinder über die Bremsleitungen zu den Radbremsen gepumpt, wo es an entsprechenden Radentlüfteranschlüssen abgelassen wird.

Um die weiteren Bereiche des Bremssystems mit frischem Druckmittel zu versorgen, wird die Pumpe eingeschaltet und die Ventile des Systems derart angesteuert, dass frisches Druckmittel von der Pumpe in diese Bereiche gefördert wird. Dabei kann die Pumpe auch getaktet angesteuert werden, um Druckpulsationen zu erzeugen, mit denen Luftblasen im Leitungssystem gelöst werden. Der gleiche Effekt wird erreicht, wenn die Auslassventile getaktet angesteuert werden.

Um einen kompletten Wechsel des Druckmittels zu erreichen, wird der Wechsel in der folgenden Reihenfolge vorgenommen:
1. Fördern des Druckmittels mittels manueller Betätigung des Bremspedals in Richtung der Radentlüfteranschlüsse;
2. Pumpenförderung des Druckmittels ebenfalls in Richtung der Radentlüfteranschlüsse;
3. Laden und Entladen des Speichers derart, dass das Druckmittel in Richtung der Radentlüfteranschlüsse gefördert wird;
4. Laden und Entladen des Speichers derart, dass das Druckmittel in Richtung des Druckmittelvorratsbehälters gefördert wird;
5. Pumpenförderung des Druckmittels in Richtung Radentlüfteranschlüsse.

Bei diesem letzten Verfahrensschritt kann auch kontrolliert werden, ob die Bremsleitungen nach einer eventuell zuvor erfolgten Reparatur richtig angeschlossen worden sind. Dazu wird bei geöffnetem Radentlüfteranschluss Druckmittel gefördert, während die der anderen Radbremsen geschlossen sind. Durch Öffnen der jeweiligen Einlassventile lässt sich ein entsprechender Druckaufbau in den Radbremsen feststellen. Dadurch, dass nach und nach alle vier Radbremsen in Triplets zusammengefasst werden, lässt sich ermitteln, welche Leitungen gegebenenfalls vertauscht worden sind, da ein Druckaufbau in jedem Teilschritt nur in denjenigen Radbremsen festgestellt werden darf, deren Einlassventile geöffnet worden sind. Sollten sich hier Abweichungen ergeben; stimmt z. B. die Zuordnung der Einlassventile zu den Radbremsen nicht mehr.

Im Folgenden soll anhand eines Ausführungsbeispieles die Erfindung näher erläutert werden. Dazu zeigen:
- Fig. 1: den hydraulischen Schaltplan einer hydraulischen Bremsanlage,
- Fig. 2: ein Diagramm zur Darstellung einer ersten Sequenz des erfindungsgemäßen Verfahrens,
- Fig. 3: ein Diagramm zur Darstellung einer zweiten Sequenz des erfindungsgemäßen Verfahrens,
- Fig. 4: ein Diagramm zur Darstellung einer dritten Sequenz des erfindungsgemäßen Verfahrens,
- Fig. 5: ein Diagramm zur Darstellung einer vierten Sequenz des erfindungsgemäßen Verfahrens und
- Fig. 6: ein Diagramm zur Darstellung einer fünften Sequenz des erfindungsgemäßen Verfahrens.

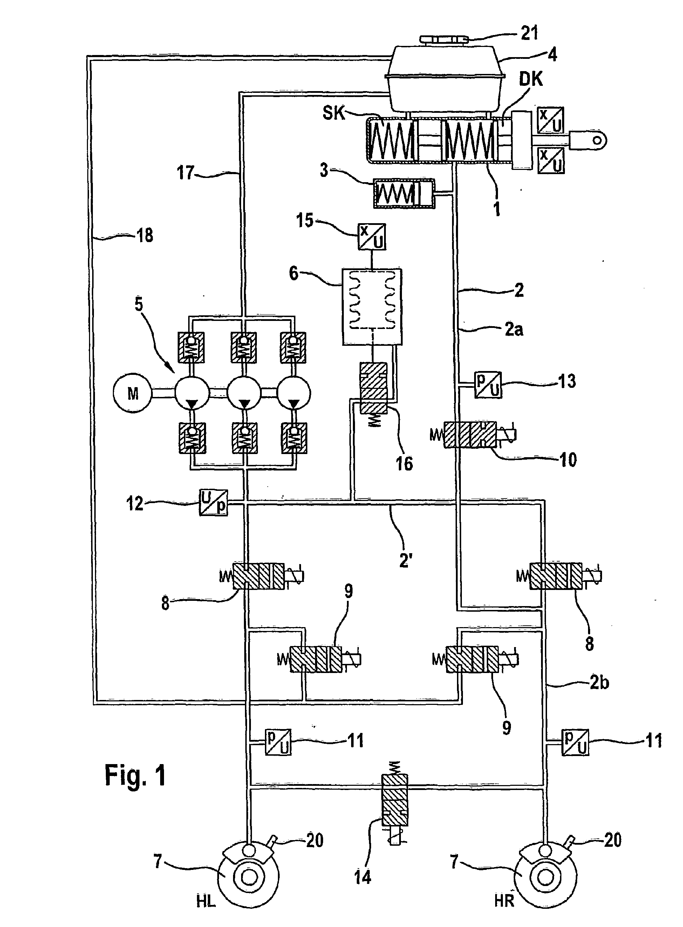

Es wird zunächst auf die Fig. 1 Bezug genommen. Diese zeigt eine typische elektrohydraulische Bremsanlage, die wie folgt aufgebaut ist:

Ein Hauptbremszylinder 1 in Tandemform besitzt zwei Bremskreise, nämlich einen Primärkreis (auch Druckstan genkreis DK genannt) und einen Sekundärkreis SK, wobei der dargestellte primäre Bremskreis 2 mit einem Pedalsi mulator 3 verbunden ist. Außerdem ist ein Druckmittelvorratsbehälter 4 an dem Hauptbremszylinder 1 angeschlossen. Motorisch angetriebene Pumpen 5 und ein Hochdruck speicher, z. B. ein Metallfaltenbalgspeicher 6, bilden ein Druckversorgungssystem, das aus dem Druckmittelvorratsbehälter 4 mit einem Druckmittel (Bremsflüssigkeit) versorgt wird, wozu die Pumpe 5 über eine Saugleitung 17 mit dem Druckmittelvorratsbehälter 4 verbunden ist. Die Radbremsen 7 der Hinterachse sind über je ein Ein lassventil 8 an dieses Druckmittelver-sorgungssystem ange schlossen. Außerdem kann über je ein Auslassventil 9 und eine Rücklaufleitung 18 eine Verbindung zum Druckmittel vorratsbehälter 4 hergestellt wer den. Die Einlass- und die Auslassventile 8, 9 sind normalerweise geschlossen. Ein Druckaufbau in den Radbremsen 7 erfolgt durch Öffnen des jeweiligen Einlassventils 8, eine Druckabsenkung durch Öffnen des jeweiligen Auslass ventils 9. Auf diese Weise ist ein geregelter Bremskreis 2' gebildet, wo-bei der den Radbremsen 7 zur Verfügung ge stellte Druck vom Hauptbremszylinderdruck bestimmt ist, der bei einer geregelten Bremsung hydraulisch von den Radbremsen 7 ge trennt ist. Dazu befindet sich in der Leitung 2a, die stromabwärts des Einlassventils 8 in die zu den Radbremsen 7 führenden Leitungen 2b mündet, ein Trennventil 10, das im Regelmodus geschlossen wird und nur dann offen bleibt, wenn eine Störung des geregelten Bremskreises 2', z. B. wegen eines Ausfalles der Druckmittelversorgung, vorliegt.

Das System wird u. a. durch diverse Drucksensoren überwacht und gesteuert. Den einzelnen Radbremsen 7 sind Bremsdrucksensoren 11 zugeordnet, dem Druckmittelversorgungssystem ein Pumpendrucksensor 12 und dem Haupt bremszylinder je Bremskreis ein Simulationsdrucksensor 13. Bei einer elektrohydraulischen Bremsung ist das Trenn ventil geschlossen. Der Druck im Hauptbremszylinder dient als Steuergröße. Dazu wird der Druck des Haupt bremszylinders 1 mit dem Simulationsdrucksensor 13 gemessen und als Steuergröße an die Steuerung des geregelten Bremskreises 2' gegeben. Bei Ausfall des Druckversorgungssystems bleibt das Trennventil 10 geöffnet. Die Radbremsen 7 sind somit in konventioneller Weise unmittelbar über Leitungen 2a und 2b mit dem Hauptbremszylinder 1 verbunden. Ein Ausgleichs ventil 14 sorgt dabei für einen Druckausgleich zwischen den Radbremsen einer Achse.

Die Bremsanlage muss regelmäßig gewartet werden, insbesondere muss die Bremsflüssigkeit gewechselt werden. Hierbei kann es zu Fehlern kommen. So können z.B. An schlüsse vertauscht werden oder aber das Bremssystem nicht richtig entlüftet werden, was zu Lufteinschlüssen führt. Um alle Bereiche der Bremsanlage mit frischem Druckmittel zu versorgen und zur Kontrolle des Bremssystems nach eventuell erfolgten Reparaturen wird daher das folgende Verfahren vorgeschlagen:

Die Radbremsen 7 sind, was nur schematisch angedeutet ist, mit ggf. ventilgesteuerten Radentlüfteranschlüssen 20 versehen, über die den Bremskreisen Druckmittel entnommen werden kann.

Um das alte, verbrauchte Druckmittel während des Druckmittelwechsels auf zufangen, werden an die Radentlüft eranschlüsse 20 vorzugsweise Entlüfterflaschen angeschlossen, in die das aus den Bremskreisen abgelassene Druckmittel fließt. Selbstverständlich sind auch andere Maßnahmen denkbar, die den Kontakt des verbrauchten Druckmittels mit der Umwelt verhindern.

Des Weiteren wird über den Füllstutzen 21 des Druckmittelvorratsbehälters 4 frisches Druckmittel während des gesamten Verfahrens manuell nachgefüllt.

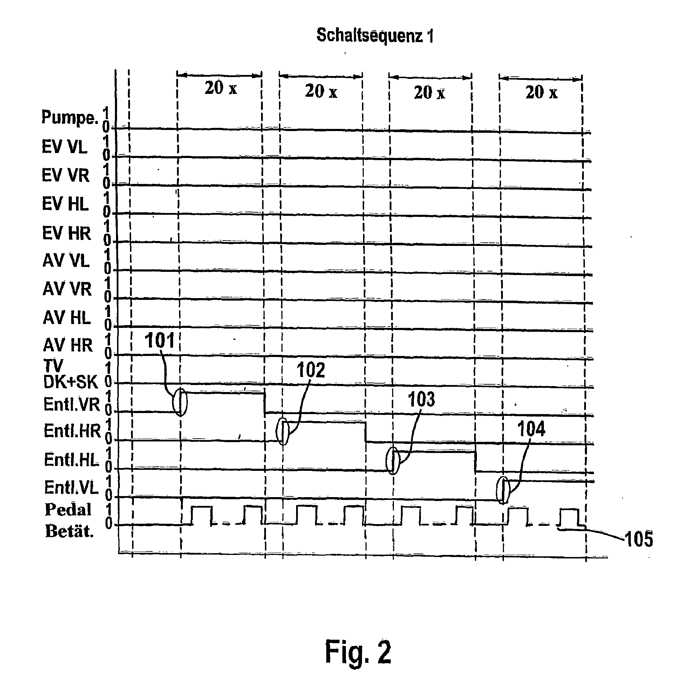

Die einzelnen Sequenzen zur Durchführung Druckmittelwechsels des hydraulischen Bremssystems sind in Form von Diagrammen dargestellt, die in den Figuren 2 - 6 dargestellt sind. Auf der horizontalen Achse ist jeweils die Zeit abgetragen, auf der vertikalen Achse die Schaltzustände für die einzelnen Komponenten des Bremssystems. Die Kurven im Diagramm zeigen an, in welchem Schaltzustand sich die einzelne Komponente befindet. Von oben nach unten werden die folgenden Komponenten berücksichtigt:
Pumpe:
   Mit den Schaltzuständen: 0: ausgeschaltet, 1: pumpend.
Einlassventile EV:
   Mit den Schaltzuständen: 0: geschlossen, 1: geöffnet.
Auslassventile AV:
   Mit den Schaltzuständen: 0: geschlossen, 1: geöffnet.
   Bei den Ein- und Auslassventilen EV und AV stehen die Abkürzungen VL, VR, HL, HR für vorne links, vorne rechts, hinten links und hinten rechts.
Trennventil TV:
   Für den Druckstangenkreis DK und den Sekundärkreis SK in den Schaltzuständen: 0: geöffnet, 1: geschlossen.
Radentlüfteranschlüsse ENTL:
   Mit den Schaltzuständen: 0: geschlossen, 1: geöffnet.
Manuelle Pedalbetätigung PEDAL BETÄT:
   Mit den Zuständen: 0: Bremspedal nicht betätigt, 1: Bremspedal betätigt.

Befinden sich alle Ventile und die Pumpe im Zustand 0, so befindet sich das Bremssystem im Grundzustand.

In der in Figur 2 dargestellten ersten Schaltsequenz lässt sich leicht erkennen, dass die Radentlüfteranschlüsse VR, HR, VL und VR nacheinander geöffnet werden (Markierungen 101, 102, 103, 104), wobei das Bremspedal zwanzigmal während einer Öffnung manuell betätigt wird (Markierung 105). Dabei wird der konventionelle Bremskreis, bestehend aus dem Hauptbremszylinder 1, dem Trennventil 2, den Bremsleitungen 2a, 2b und den Radbremsen 7, von frischem Druckmittel durchströmt, da während des gesamten Verfahrens über den Füllstutzen 21 des Druckmittelvorratsbehälters 4 frisches Druckmittel manuell nachgefüllt wird, wie oben bereits erwähnt. Der geregelte Bremskreis 2' bleibt davon unberührt, da sowohl die Einlassventile 8 als auch die Auslassventile 9 geschlossen bleiben. Dieser Vorgang entspricht einem konventionellen Wechsel des Druckmittels, also dem Wechsel des Druckmittels eines konventionellen, nicht geregelten Bremssystems.

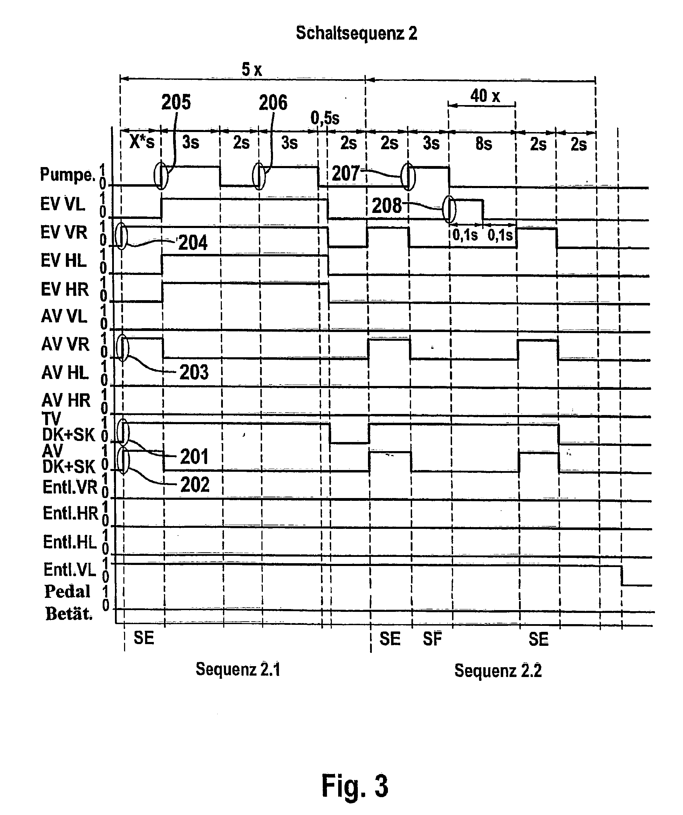

In den folgenden Diagrammen der Fig. 3 ist zusätzlich der Schaltzustand des Ausgleichsventils AV 14 im Druckstangenkreis und Sekundärkreis angegeben. Die Zustände sind 0: geöffnet und 1: geschlossen.

Die zweite Schaltsequenz beginnt mit einer Speicherentleerung SE, bei der die Trennventile 10 (Markierung 201) und die Ausgleichsventile 14 (Markierung 202) geschlossen sind. Außerdem ist das Einlassventil 8 und das Auslassventil 9 für eine Radbremse, z. B. der vorne rechts, geöffnet (Markierung 203, 204). Dies führt zu einer Entleerung des Speichers 6 über die Rücklaufleitung 18.

Danach werden in einer Teilsequenz 2.1 alle Einlassventile 8 geöffnet, alle Auslassventile 9 geschlossen sowie die Trennventile 10 der beiden Bremskreise geschlossen, wobei die Ausgleichsventile 14 geöffnet bleiben können. Weiterhin bleibt der Radentlüfteranschluss vorne links offen bzw. der Radentlüfteranschluss 20, an dem sich die Entlüfterflasche befindet, offen, so dass die Pumpen 5 aus dem Druckmittelvorratsbehälter 4 in diesen Radentlüfteranschluss 20 pumpen (Markierung 205, 206). Dabei wird insbesondere die Saugleitung 17 mit frischem Druckmittel durchspült und damit auch entlüftet. Für die Pumpen 5 sind gegebenenfalls Schaltpausen vorzusehen. Zum Beenden dieser Teilsequenz 2.1 werden die Einlassventile 8 wieder geschlossen, wobei darauf zu achten ist, dass die Pumpen 5 ihren Betrieb kurz zuvor einstellen, um Druckspitzen zu vermeiden. Die Teilsequenz 2.1 kann bis zu 5 mal wiederholt werden.

Die folgende Teilsequenz 2.2 sieht zunächst wieder eine Speicherentladung SE und eine anschließende definierte Speicherfüllung SF vor, bei der die Einlassventile 8 geschlossen sind, während die Pumpe 5 fördert (Markierung 207). Danach wird das Einlassventil vorne links in kurzen Takten von weniger als 0,1 Sekunden 40 mal geöffnet und geschlossen (Markierung 208), so dass der Speicher 6 pulsartig entleert wird und das Druckmittel über den Entlüfteranschluss 20 vorne links abfließen kann. Dadurch wird der Speicher mit frischem Druckmittel versorgt und außerdem werden durch die pulsartige Belastung des Systems anhaftende Blasen insbesondere im Ventilblock gelöst.

Daran schließt sich ein Schritt an, bei dem der Speicher wieder entleert wird und das System in den Grundzustand gesetzt wird.

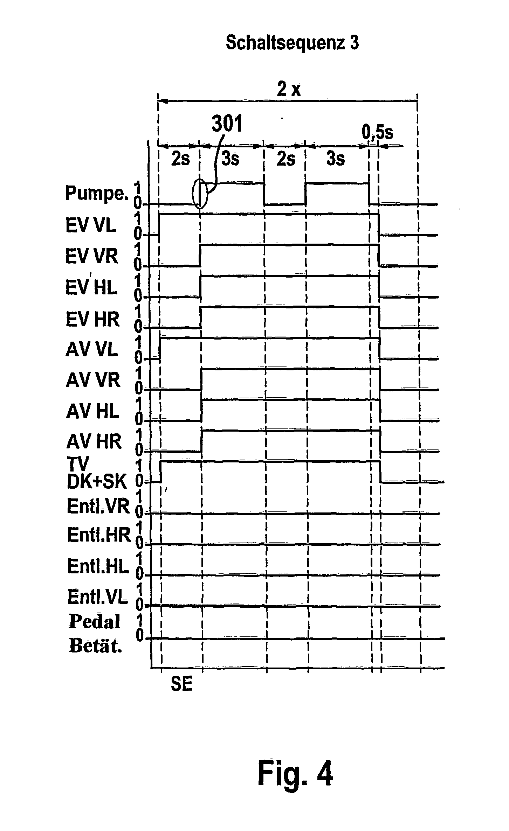

In der folgenden Schaltsequenz 3 (Figur 4) sind alle Einlassventile 8 und alle Auslassventile 9 geöffnet. Die Radentlüfteranschlüsse 20 sind geschlossen, so dass bei eingeschalteter Pumpe 5 (Markierung 301) Druckmittel aus dem Vorratsbehälter 4 über die Ein- und Auslassventile 8, 9 und über die Rücklaufleitung 18 zurück zum Druckmittelvorratsbehälter 4 gefördert wird. Dieser Schritt dient insbesondere der Versorgung der Rücklaufleitung 18 mit frischem Druckmittel und deren Entlüftung. Dort eingeschlossene Luft gelangt in den Druckmittelvorratsbehälter. Dort trennt sie sich vom Druckmittel und sammelt sich in der Gasphase oberhalb des Füllstandes.

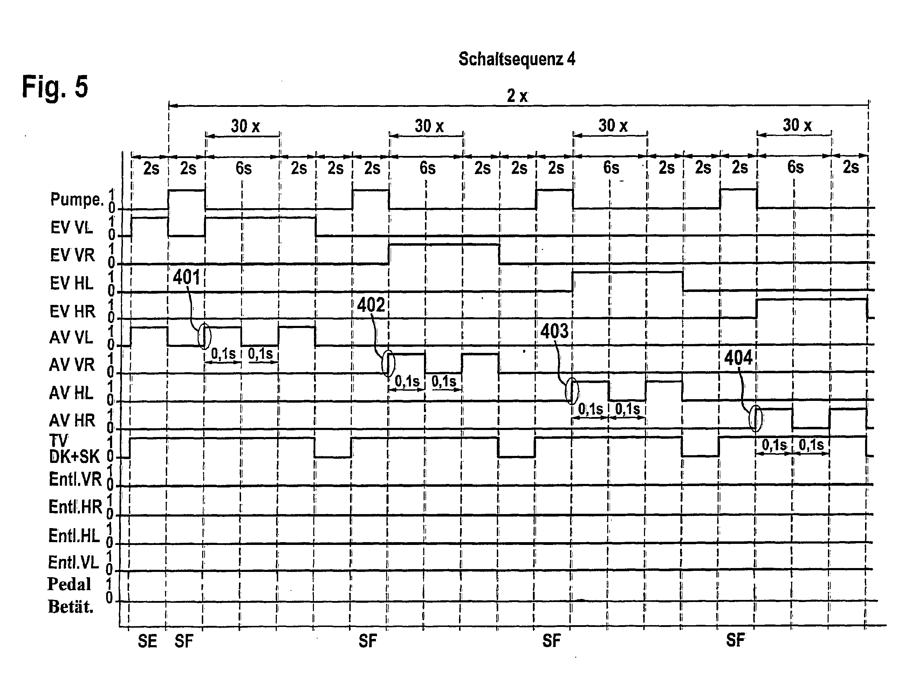

Im Prozessschritt 4 (Fig. 5) erfolgt ebenfalls eine Spülung der Rücklaufleitung 18. Dabei werden aber die Auslassventile 9 (Markierung 401 bis 404) nacheinander jeweils getaktet geschaltet, so dass wiederum Druckpulsationen erzeugt werden und die Rücklaufleitung 18 stoßweise durchspült wird. Dies soll bewirken, dass sich Luftblasen lösen. Die Schaltsequenz 4 kann zweimal durchgeführt werden.

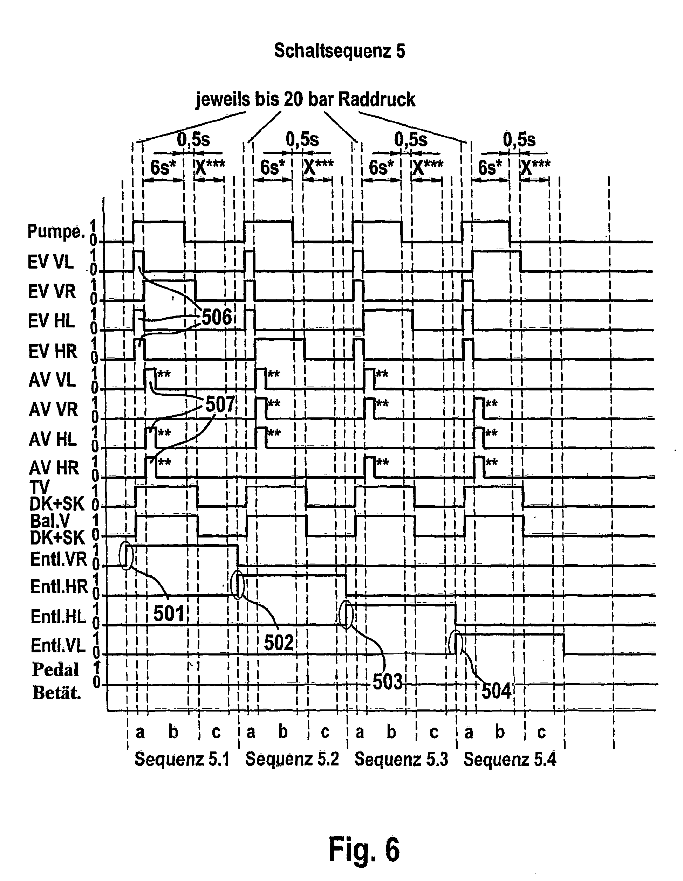

In einer abschließenden 5. Sequenz, dargestellt in der Figur 6, werden die Radentlüfteranschlüsse 20 in den Teilsequenzen 5.1, 5.2, 5.3 und 5.4 nacheinander geöffnet (Markierung 501 bis 504). Dabei werden, bevor das Einlassventil 8 der Radbremse mit geöffnetem Radentlüfteranschluss 20 geöffnet wird (Markierung 505), zunächst die jeweils anderen drei Einlassventile (Triple) geöffnet (Markierung 506), so dass sich in den zugehörigen Radbremsen ein Druck aufbaut, der kurz danach wieder auf ca. 2 bar durch Öffnen der zugehörigen Auslassventile 9 reduziert wird (Markierung 507). Dabei kann der Druck in den Radbremsen überwacht werden. Dieser muss mit den jeweiligen Schaltzuständen korrespondieren. Da auf diese Weise nacheinander in jeweils zu Triplen zusammengestellten Radbremsen ein Druck aufgebaut und wieder reduziert wird, lässt sich feststellen, ob gegebenenfalls eine Vertauschung von Leitungen stattgefunden hat. Anschließend fördert die Pumpe durch den geöffneten Radentlüfteranschluss 20 eine größere Menge der Druckmittelflüssigkeit, um die restliche Luft und die verbrauchte Bremsflüssigkeit aus dem hydraulischen System zu entfernen. Das Ende einer Teilsequenz stellt die mehrfache, manuelle Betätigung des Bremspedals dar (Markierung 508), bei der frisches Druckmittel vom Druckmittelvorratsbehälter 4 zu dem geöffneten Radentlüfteranschluss 20 gefördert wird. Die Anzahl der Betätigungen wird vom Bediener bestimmt und wird durch die Qualität des aus dem System geförderten Druckmittels, das heißt frisches und luftfreies Druckmittel, geprägt sein.

## Patentansprüche

1. Verfahren zum Wechsel des Druckmittels eines elektrohydraulischen Bremssystems, bestehend aus einem pedalbetätigten Hauptbremszylinder (1) und einem vom Hauptbremszylinderdruck geregelten Bremskreis mit einer Pumpe (5), deren Saugseite über eine Saugleitung (17) an einen Druckmittelvorratsbehälter (4) angeschlossen ist, sowie Ein- und Auslassventilen (8, 9) für die an den Bremskreis angeschlossenen Radbremsen (7), wobei ein Auslassventil (9) die Verbindung der zugehörigen Radbremse (7) zum Druckmittelvorratsbehälter (4) über eine drucklose Rücklaufleitung (18) steuert, bei dem ein konventioneller Wechsel des Druckmittels durch mehrfache, manuelle Betätigung des Bremspedals und ein Einschalten der Pumpe (5) und Fördern von Druckmittel aus dem Vorratsbehälter (4) vorgesehen ist, **dadurch gekennzeichnet, dass** ein Schalten der Ein- und Auslassventile (8, 9) und eines Trennventils (10) vorgesehen ist, sodass Druckmittel aus einem Hochdruckspeicher (6) entweder zu den Radentlüfteranschlüssen (20) oder in den Druckmittelvorratsbehälter (4) gelangt, wobei die Verbindung der zugehörigen Radbremse (7) zum Hochdruckspeicher (6) durch ein Einlassventil (8) gesteuert wird und der Hauptbremszylinder (1) über das Trennventil (10) stromabwärts der Einlassventile (8) an den Bremskreis angeschlossen ist.

2. Verfahren nach Anspruch 1, **dadurch gekennzeichnet, dass** während der Durchführung der Verfahrensschritte frisches Druckmittel über den Druckmittelvorratsbehälter (4) nachgefüllt wird.

3. Verfahren nach Anspruch 1, **dadurch gekennzeichnet, dass** beim Fördern von Druckmittel in den Druckmittelvorratsbehälter (4) die Pumpe (5) getaktet angesteuert wird.

4. Verfahren nach Anspruch 1, **dadurch gekennzeichnet, dass** beim Fördern von Druckmittel in den Druckmittelvorratsbehälter (4) die Auslassventile (9) getaktet angesteuert werden.

5. Verfahren nach einem der vorhergehenden Ansprüche, **dadurch gekennzeichnet, dass** der Wechsel des Druckmittels mittels Pumpe (5) in der folgenden Reihenfolge vorgenommen wird:
Fördern des Druckmittels mittels manueller Betätigung des Bremspedals in Richtung der Radentlüfteranschlüsse (20);
Pumpenförderung des Druckmittels ebenfalls in Richtung der Radentlüfteranschlüsse (20);
Laden und Entladen des Speichers (6) derart, dass das Druckmittel in Richtung der Radentlüfteranschlüsse (20) gefördert wird;
Laden und Entladen des Speichers (6) derart, dass das Druckmittel in Richtung des Druckmittelvorratsbehälters (4) gefördert wird;
Pumpenförderung des Druckmittels in Richtung Radentlüfteranschlüsse (20).

6. Verfahren nach einem der vorhergehenden Ansprüche, **dadurch gekennzeichnet, dass** während einer Förderung des Druckmittels über den Radentlüfteranschluss (20) eines Rades, die anderen drei Radbremsen (7) durch Öffnen der zugehörigen Einlassventile (8) mit Druck beaufschlagt werden, wobei die Radbremsdrücke gemessen werden und die ermittelten Drucktriplen in Korrelation zu den geschalteten Einlassventilen (8) gebracht werden.

## Claims

1. A method for changing the pressure fluid of an electrohydraulic brake system, comprising a pedal-operated master brake cylinder (1) and a brake circuit controlled by the master brake cylinder pressure, including a pump (5) the intake side of which, by means of an intake conduit (17), is in communication with a pressure fluid reservoir (4), and inlet and outlet valves (8, 9) for the wheel brakes (7) connected to the brake circuit, with an outlet valve (9) controlling the connection of the related wheel brake (7) to the pressure fluid reservoir (4) by means of a non-pressurized return conduit (18), wherein a conventional change of the pressure fluid is provided by repeated manual application of the brake pedal and switch-on of the pump (5) and delivery of pressure fluid from the reservoir (4),
**characterized in that** the inlet and outlet valves (8, 9) and a cut-off valve (10) are operated so that pressure fluid is fed from a high-pressure accumulator (6) either to the wheel bleeder connections (20) or into the pressure fluid reservoir (4), and the connection of the associated wheel brake (7) to the high-pressure accumulator (6) is controlled by an inlet valve (8), and the master brake cylinder (1) is connected to the brake circuit by means of the cut-off valve (10) inserted downstream of the inlet valves (8).

2. Method as claimed in claim 1,
**characterized in that** fresh pressure fluid is replenished by way of the pressure fluid reservoir (4) while the process steps are performed.

3. Method as claimed in claim 1,
**characterized in that** the pump (5) is clock-actuated when pressure fluid is supplied into the pressure fluid reservoir (4).

4. Method as claimed in claim 1,
**characterized in that** the outlet valves (9) are clock-actuated when pressure fluid is supplied into the pressure fluid reservoir (4).

5. Method as claimed in any one of the preceding claims,
**characterized in that** the change of the pressure fluid is executed by means of the pump (5) in the following sequence:
delivering the pressure fluid by means of manual application of the brake pedal in the direction of the wheel bleeder connections (20);
pressure fluid delivery by the pump also in the direction of the wheel bleeder connections (20);
loading and unloading the accumulator (6) in such a fashion that the pressure fluid is delivered in the direction of the wheel bleeder connections (20);
loading and unloading the accumulator (6) in such a fashion that the pressure fluid is delivered in the direction of the pressure fluid reservoir (4);
pressure fluid delivery by the pump in the direction of the wheel bleeder connections (20).

6. Method as claimed in any one of the preceding claims,
**characterized in that** during a delivery of pressure fluid by way of the wheel bleeder connection (20) of one wheel, pressure is applied to the other three wheel brakes (7) by opening the associated inlet valves (7), with the wheel brake pressures being measured and the determined pressure triplets being set into correlation to the operated inlet valves (8).

## Revendications

1. Procédé à changer le fluide comprimé d'un système de freinage électro-hydraulique, composé d'un maître-cylindre de frein (1) commandé par pédale, et d'un circuit de frein commandé par la pression du maître-cylindre et comportant une pompe (5) le côté d'aspiration de laquelle par l'intermédiaire d'une conduite d'aspiration (17) est relié à un réservoir de fluide comprimé (4), et d'une soupape d'admission et d' une soupape de sortie (8, 9) pour les freins sur roue (7), une soupape de sortie (9) commandant la jonction des freins sur roue (7) affiliés au réservoir de fluide comprimé par l'intermédiaire d'une conduite à retour (18) non-comprimée où le fluide comprimé est changé de manière classique par l'intermédiaire d'une manuelle opération répétée de la pédale de frein, la pompe (5) est mise en oeuvre et du fluide comprimé est transporté du réservoir (4), **caractérisé en ce qu'** un réglage des soupapes d'admission et de sortie (8, 9) et d'une soupape séparatrice (10) est prévu pour transporter du fluide comprimé d'un réservoir à haute pression (6) soit aux raccords de purge-roue (20) soit au réservoir de fluide comprimé (4), la jonction du frein sur roue (7) affiliée au réservoir à haute pression (6) étant commandée par l'intermédiaire d'une soupape d'admission (8) et le cylindre maître de frein (1) étant relié par l'intermédiaire de la soupape séparatrice (10) au circuit de frein en aval des soupapes d'admission (8).

2. Procédé selon la revendication 1, **caractérisé en ce que** du fluide comprimé frais est rempli par l'intermédiaire du réservoir de fluide comprimé pendant la mise en oeuvre des mesures de procédé.

3. Procédé selon la revendication 1, **caractérisé en ce que** la pompe (5) pendant le transport du fluide comprimé dans le réservoir de fluide comprimé est actionnée périodiquement.

4. Procédé selon la revendication 1, **caractérisé en ce que** les soupapes de sortie (9) pendant le transport du fluide comprimé dans le réservoir de fluide comprimé sont actionnées périodiquement.

5. Procédé selon l'une des revendications précédentes, **caractérisé en ce que** le changement du fluide comprimé est exécuté par la pompe (5) dans l'ordre suivant :
transport du fluide comprimé par l'intermédiaire de l'opération manuelle de la pédale de frein dans la direction des raccords (20) de purge-roues;
circulation de la pompe du fluide comprimé également dans la direction des raccords (20) de purge-roues;
chargement et déchargement du mémoire (6) de sorte que le fluide comprimé soit transporté dans la direction des raccords (20) de purge-roues;
chargement et déchargement du mémoire (6) de sorte que le fluide comprimé soit transporté dans la direction du réservoir de fluide comprimé (4);
circulation de fluide comprimé dans la direction des raccords (20) de purge-roues.

6. Procédé selon l'une des revendications précédentes, **caractérisé en ce que** pendant le transport du fluide comprimé par l'intermédiaire des raccords (20) de purge-roues une force de pression est appliquée aux autres trois freins sur roue (7) en ouvrant les soupapes d'admission (8) affiliées, les compressions de roue étant mesurées et les compressions triples déterminées étant mises en corrélation aux soupapes d'admission (8).
